# EUROPÄISCHE PATENTSCHRIFT

(11) **EP 3 725 657 B1**
(45) Veröffentlichungstag und Bekanntmachung des Hinweises auf die Patenterteilung: **29.07.2026**
(21) Anmeldenummer: 20165477.9
(22) Anmeldetag: 25.03.2020
(51) Int. Cl.: B62M 6/40, B62M 6/55, B62M 11/00

(54) **ANTRIEBSEINHEIT UND ARBEITSVORRICHTUNG**
DRIVE UNIT AND WORKING DEVICE
UNITÉ D'ENTRAÎNEMENT ET DISPOSITIF DE TRAVAIL

(30) Priorität: 16.04.2019 DE 102019205486
(43) Veröffentlichungstag der Anmeldung: 21.10.2020
(73) Patentinhaber: Robert Bosch GmbH, 70442 Stuttgart (DE)
(72) Erfinder: Braun, Sigmund, 72127 Kusterdingen (DE); Doelling, Rolando, 72379 Hechingen (DE)

(56) Entgegenhaltungen:
- EP-A1- 3 252 329
- EP-A2- 1 088 752
- EP-A2- 2 413 474
- US-A1- 2017 137 087

## Beschreibung

### Stand der Technik

Die vorliegende Erfindung betrifft eine Antriebseinheit und Arbeitsvorrichtung. Die vorliegende Erfindung betrifft eine Antriebseinheit für eine mit Motorkraft und zusätzlich mit Muskelkraft antreibbare Arbeitsvorrichtung, für ein Fahrzeug, Fahrrad, Elektrofahrrad, eBike, Pedelec und/oder S-Pedelec sowie ein Fahrzeug, Elektrofahrrad, eBike, Pedelec und/oder S-Pedelec als solche.

Viele Arbeitsvorrichtungen werden unter Verwendung einer Antriebseinheit, welche einen Motor umfasst, angetrieben. Dabei befinden sich der Motor oder Teile davon sowie gegebenenfalls Komponenten eines zu Grunde liegenden Getriebes in einem Gehäuse, um die entsprechenden Betriebsteile nach außen hin zu schützen und um deren Halterung und Lagerung zu gewährleisten und gegebenenfalls einen abgeschlossenen Schmierraum zu definieren. Bei herkömmlichen Anordnungen ist problematisch, dass verschiedene Motor- und/oder Getriebekomponenten in direkten metallischen Kontakt zu Gehäusekomponenten geraten und dass dabei entstehende Schwingungen über die Kopplung des Gehäuses nach außen, zum Beispiel über Rahmenteile oder dergleichen, auch nach außen hin als Schwingungen haptisch oder als Schall akustisch wahrnehmbar sind.

Ferner wird auf die Druckschriften EP 1 088 752 A2, US 2017/137087 A1, EP 2 413 474 A2 und EP 3 252 329 A1 verwiesen.

### Offenbarung der Erfindung

Die erfindungsgemäße Antriebseinheit mit den Merkmalen des Anspruchs 1 weist demgegenüber den Vorteil auf, dass im Inneren der Antriebseinheit entstehende Schwingungen und/oder Schall in ihrem Erscheinen nach außen hin zumindest teilweise gedämpft oder vollständig unterdrückt werden können. Dies wird erfindungsgemäß mit den Merkmalen des Anspruchs 1 dadurch erreicht, dass eine Antriebseinheit für eine mit Motorkraft und insbesondere zusätzlich mit Muskelkraft antreibbare Arbeitsvorrichtung, für ein Fahrzeug, Elektrofahrrad, eBike.

Pedelec und/oder für ein S-Pedelec geschaffen wird, welche ausgebildet ist mit einem Motor, einem Getriebe und einem Gehäuse, in dessen Inneren der Motor und/oder das Getriebe zumindest teilweise aufgenommen und/oder gelagert ist bzw. sind. Dabei weist das Gehäuse in seinem Inneren ganz ein Innengehäuse zur Aufnahme und/oder zur Lagerung zumindest eines Teils des vom Gehäuse aufgenommenen und/oder gelagerten Getriebes in dessen Innerem auf. Das Innengehäuse ist am Gehäuse angebracht. Allein schon durch das Vorsehen einer weiteren Kapselung durch das Innengehäuse im Inneren des übergeordneten Gehäuses werden mechanische Schwingungen und insbesondere Schall nach außen hin zumindest gedämpft oder gar vollständig unterdrückt.

Die Unteransprüche zeigen bevorzugte Weiterbildungen der Erfindung. Grundsätzlich sind verschiedene Montagearten für das Innengehäuse in Bezug auf das übergeordnete Gehäuse denkbar.

Im Hinblick auf die Dämpfung mechanischer Schwingungen insbesondere von Schall ist es jedoch besonders vorteilhaft, wenn gemäß einer bevorzugten Ausgestaltungsform der erfindungsgemäßen Antriebseinheit das Innengehäuse ganz oder teilweise am Inneren des Gehäuses angebracht ist, wobei also die mechanische Anbringung oder Montage insbesondere an einer Innenfläche oder Innenseite des umgebenden übergeordneten Gehäuses erfolgt.

Weitere Vorteile stellen sich im Hinblick auf eine Dämpfung oder Unterdrückung nach außen auftretender mechanischer Schwingungen oder von Schall stellen sich ein, wenn gemäß eines Ausführungsbeispiels der erfindungsgemäßen Antriebseinheit das Innengehäuse zusätzlich oder alternativ über ein oder mehrere Befestigungselemente am übergeordneten Gehäuse angebracht ist und das eine oder die mehreren Befestigungselemente - insbesondere auf Grund ihrer materiellen, geometrischen und/oder konstruktiven Ausgestaltungsform - mechanisch und/oder akustisch entkoppelnd ausgebildet sind.

Dabei können insbesondere ein oder mehrere Befestigungselemente als Entkopplungselemente und/oder Dämpfungselemente ausgebildet sein oder sie können Entkopplungselemente und/oder Dämpfungselemente aufweisen.

Um die entkoppelnde oder dämpfende Wirkung und Eigenschaft bei der erfindungsgemäßen Antriebseinheit zu realisieren, können ein oder mehrere Befestigungselemente und/oder entsprechende Entkopplungselemente in vorteilhafter Weise mit oder aus einem mechanisch und/oder akustisch entkoppelnden Material ausgebildet sein.

Dabei, aber auch grundsätzlich, können das eine oder die mehreren Befestigungselemente und/oder das eine oder die mehreren Entkopplungselemente mit oder aus einem Material aus der Gruppe von Materialien ausgebildet sein oder werden, welche aufweist metallische Materialien, Metalle, Aluminium, Verbundwerkstoffe, poröse Materialien, geschäumte Materialien, schaumartige Materialien und/oder gesinterte Materialien.

Insbesondere ist es denkbar, dass ein jeweiliges Befestigungselement und/oder ein jeweiliges Entkopplungselement als Unterlegscheibe, Federring, Feder-Dämpfer-Element, Schraubenauflage und/oder Zentrierelement ausgebildet ist bzw. sind.

Neben den vorteilhaften Eigenschaften in Bezug auf mechanische Schwingungen und/oder Schall können die Materialeigenschaften und/oder Eigenschaften der Konfiguration und Geometrie der Komponenten des übergeordneten äußeren Gehäuses, des Innengehäuses, der Befestigung- und/oder Dämpfungselemente auch in vorteilhafter Weise zur entsprechenden Ausgestaltung der Wärmeübertragung zwischen Innengehäuse und Außengehäuse weitergebildet werden.

So ist es gemäß einer anderen vorteilhaften Ausgestaltungsform der erfindungsgemäßen Antriebseinheit vorgesehen, dass ein Befestigungselement und/oder ein Entkopplungselement zur Wärmekopplung des Innengehäuses an das Gehäuse ausgebildet ist, insbesondere also aus einem wärmeleitenden, vorzugsweise gerichtet wärmeleitenden Material und mit einer entsprechenden konstruktiven und/oder geometrischen Konfiguration.

Besonders vorteilhaft lässt sich die erfindungsgemäße Antriebseinheit einsetzen, wenn diejenigen Komponenten eines Antriebs, die in bekannter Weise zu einem hohen Anteil der mechanischen Schwingungen und/oder des Schalls beitragen, im Innengehäuse verborgen und somit mechanisch und/oder akustisch vom Außengehäuse entkoppelt werden.

So ist es also besonders vorteilhaft, wenn gemäß eines Ausführungsbeispiels der erfindungsgemäßen Antriebseinheit im Inneren des Innengehäuses ein Rotor des zu Grunde liegenden Motors des Antriebs, eine Rotorwelle des zu Grunde liegenden Motors des Antriebs und/oder - insbesondere hochtourige oder schnelllaufende - Teile des Getriebes des Antriebs ganz oder teilweise aufgenommen und/oder gelagert sind oder werden.

Ferner betrifft die vorliegende Erfindung gemäß einem anderen Aspekt eine mit Motorkraft und gegebenenfalls zusätzlich mit Muskelkraft antreibbare Arbeitsvorrichtung, ein Fahrzeug, Fahrrad, Elektrofahrrad, eBike, Pedelec und/oder S-Pedelec. Die Arbeitsvorrichtung ist mit einer erfindungsgemäß ausgestalteten Antriebseinheit und mit einer Steuereinheit, welche zur Steuerung der Antriebseinheit (80) eingerichtet ist, ausgebildet.

### Kurzbeschreibung der Figuren

Unter Bezugnahme auf die beigefügten Figuren werden Ausführungsformen der Erfindung im Detail beschrieben.
- Figur 1: ist eine schematische Darstellung eines Beispiels eines Fahrzeuges nach Art eines Elektrofahrrads, bei welchem eine Ausführungsform der Erfindung realisiert ist.
- Figuren 2 und 3: zeigen in schematischer und geschnittener Seitenansicht Details der Befestigung eines Innengehäuses oder einer Inneren Getriebebox an einem übergeordneten äußeren Gehäuse bei einer Ausführungsform der erfindungsgemäßen Antriebseinheit.
- Figuren 4 und 5: zeigen in schematischer und perspektivischer Draufsicht Details der Befestigung eines Innengehäuses oder einer Inneren Getriebebox an einem übergeordneten äußeren Gehäuse bei einer Ausführungsform der erfindungsgemäßen Antriebseinheit.
- Figur 6: illustriert nach Art einer schematischen Explosionsdarstellung perspektivisch Aspekte eines erfindungsgemäß verwendeten Innengehäuses mit entsprechenden Befestigung- und Montagemechanismen.
- Figuren 7 und 8: zeigen in schematischer und teilweise geschnittener Seitenansicht eine Ausführungsform der erfindungsgemäßen Antriebseinheit im montierten bzw. teilweise demontierten Zustand.

### Bevorzugte Ausführungsformen der Erfindung

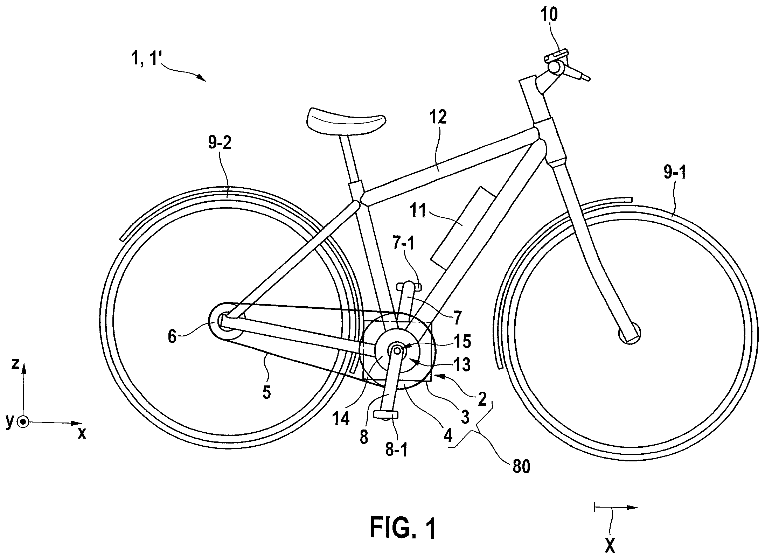

Nachfolgend werden unter Bezugnahme auf die Figuren 1 bis 8 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad 1' als eine bevorzugte Ausführungsform der erfindungsgemäßen Arbeitsvorrichtung 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 oder Motor ist in den Kurbeltrieb 2 integriert. Am Hinterrad 9-2 ist ein Ritzel 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine erfindungsgemäß aufgebaute und eingerichtete Steuereinheit 10 angeordnet, welche mit dem gegebenenfalls ausgebildeten elektrischen Antrieb 3 verbunden ist. Im oder am Rahmen 12 ist ferner eine Batterie 11 ausgebildet, welche zur Stromversorgung des elektrischen Antriebes 3 dient.

Im Rahmen 12 integriert ist ein Kurbellager 13 oder Tretlager, welches ein Kurbelgehäuse 14 und eine Kurbelwelle 15 aufweist.

Die Antriebseinheit 80 des erfindungsgemäßen Fahrzeuges 1 aus Figur 1 weist den Kurbeltrieb 2 und den elektrischen Antrieb 3 oder Motor auf, wobei die von letzterem erzeugbaren oder erzeugten Drehmomente zur Unterstützung eines muskulär durch den Fahrer aufgebrachten Drehmoments über eine entsprechende und in Figur 1 nicht explizit dargestellte Übertragungseinrichtung aufnehmbar und an das Kettenblatt als Abtriebselement 4 übertragbar sind.

Die Steuereinheit 10 ist dazu eingerichtet, ein durch den Antrieb 80 erzeugtes und auf die Abtriebswelle 15, insbesondere im Sinne einer Kurbelwelle des Fahrzeugs 1, aufbringbares und/oder aufgebrachtes Motormoment zur Unterstützung des muskulär vom Fahrer aufgebrachten Drehmoments zu steuern und/oder zu regeln.

Wie oben bereits im Detail dargelegt wurde besteht ein Kernaspekt der vorliegenden Erfindung darin, ein Gehäuse 40 der Antriebseinheit 80 in seinem Inneren mit einem Innengehäuse 50 oder einem Teil davon auszubilden, wobei das Innengehäuse 50 eingerichtet ist, (i) zumindest einen Teil oder die Gesamtheit der vom übergeordneten Gehäuse 40 in seinem Inneren 40i aufgenommenen und/oder gelagerten Komponenten des Motors 3 und/oder eines Getriebes 20 der Antriebseinheit 80 in seinem Inneren 50i aufzunehmen und/oder zu lagern und (ii) am Gehäuse 40 angebracht zu werden.

Durch die erfindungsgemäß ergriffenen Maßnahmen erfolgt quasi eine doppelte Verkapselung, nämlich im übergeordneten äußeren Gehäuse 40 und im Innengehäuse 50 mit dem Ergebnis, dass mechanische Schwingungen und Vibrationen und insbesondere Schall, welche von den vom Innengehäuse 50 umfassten Komponenten oder Komponententeilen erzeugt werden, außerhalb des übergeordneten und äußeren Gehäuses 40 zumindest gedämpft, also reduziert auftreten oder vollständig eliminiert sind.

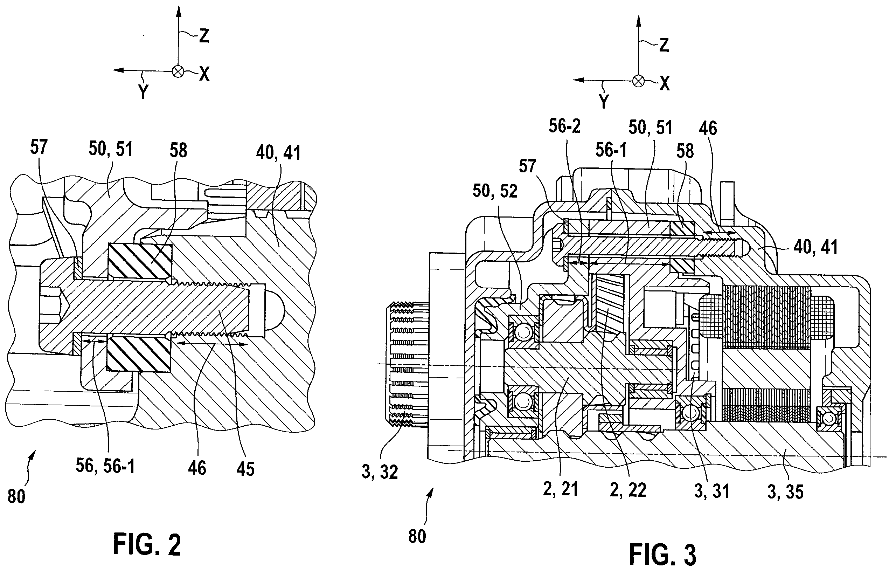

Die Figuren 2 und 3 zeigen in schematischer und geschnittener Seitenansicht Details der Befestigung eines Innengehäuses 50 oder einer inneren Getriebebox 50 an einem übergeordneten äußeren Gehäuse 40 bei einer Ausführungsform der erfindungsgemäßen Antriebseinheit 80.

Zu erkennen ist, dass das äußere Gehäuse 40 - welches vorangehend und nachfolgend auch als Außengehäuse 40 bezeichnet wird - im Wesentlichen aus einer ersten Hälfte oder Schale 41, welche auch als Deckel bezeichnet werden kann, und einer zweiten Hälfte oder Schale 42, welche auch als Rumpf bezeichnet werden kann, gebildet wird. Dieser rein zweiteilige Aufbau ist jedoch nicht zwingend, sondern kann entsprechend den Anwendungserfordernissen angepasst werden.

Im Inneren 40i des Außengehäuses 40, nämlich im Bereich der ersten Hälfte 41, sind als Befestigungselemente 46 dienende Schraublöcher ausgebildet, welche der Aufnahme von als Entkopplungselemente 58 fungierenden Zentrierelementen oder Zwischenelementen zum Aufnehmen und Abstützen des Innengehäuses 50 und der Aufnahme von Schrauben als Befestigungselemente 45 dienen, wobei die Schrauben 45 Paare erster und zweiter Montagelöcher 56-1 und 56-2, welche ebenfalls als Befestigungselemente in Form von Durchgangslöchern dienen, im montierten Zustand durchdringen.

Der Motor 3 der Antriebseinheit 80 wird hier repräsentiert durch einen Stator 35, welcher im Außengehäuse 40 in dessen erster Hälfte 41 angeordnet ist und einen Rotor 31, welcher am und/oder im Innengehäuse 50 angeordnet ist.

Das mit dem Motor 3 gekoppelte Getriebe 20 wird hier repräsentiert durch erste und zweite Getriebeteile 21 bzw. 22, welche am bzw. im Innengehäuse 50 angeordnet sind, so dass sich in Bezug auf deren Entwicklung mechanischer Vibrationen und Schwingungen und/oder von Körperschall die Erfindung in vorteilhafterweise reduzierend oder dämpfend auswirkt.

Als weitere Schwingungen und/oder Schall nach außen reduzierende Maßnahme kann ein Dämpfungselement 59 ausgebildet sein, wie dies hier im Zusammenhang mit der Anordnung im Bereich der Rotorwelle 32 und des zweiten Getriebeteils 22 schematisch angedeutet ist.

Bei der Ausführungsform gemäß Figur 2 ist dargestellt, dass das Innengehäuse 50 mit seiner ersten Schale oder Hälfte 51, die auch als Deckel bezeichnet werden kann, über ein Montageloch 56, 56-1 als Befestigungsmittel oder Befestigungselement, mittels einer Schraube 45 als Befestigungselement in ein Schraubloch oder Gewindeloch 46 des Außengehäuses 50 und insbesondere auf dessen Innenseite 50i durch Einschrauben angebracht und/oder befestigt ist.

Dabei übernehmen erfindungsgemäß zwischengeschaltete Entkopplungselemente die Aufgabe des Reduzierens oder Verhinderns der Übertragung von mechanischen Schwingungen und Vibrationen und von Körperschall nach außen bzw. deren Dämpfung. In diesem Fall sind bei der in Figur 2 gezeigten Ausführungsform zwischen der Schraube 45 und dem Montageloch 56-1 eine Schraubenauflage 57, die auch als Unterlegscheibe aufgefasst werden kann, und ein Zentrierelement 58, welches auch als Zwischenelement aufgefasst werden kann ausgebildet, so dass auf Grund von deren konstruktiven und/oder materiellen Eigenschaften mechanische Vibrationen und/oder Schwingungen, welche am oder im Innengehäuse 50 durch die dort vorliegenden Komponenten entstehen, in ihrer Übertragung an das Außengehäuse 40 reduziert oder gedämpft werden.

In analoger Weise zeigt Figur 3, wie das Innengehäuse 50 mit seiner ersten Schale oder Hälfte 51 und seiner zweiten Schale oder Hälfte 52, die auch als Rumpf bezeichnet werden kann, über ein Paar von Montagelöchern 56-1, 56-2 als Befestigungsmittel oder Befestigungselemente, mittels einer Schraube 45 als Befestigungselement in ein Schraubloch oder Gewindeloch 46 des Außengehäuses 50 und insbesondere auf dessen Innenseite 50i durch Einschrauben angebracht und/oder befestigt ist. Auch hier sind Entkopplungselemente in Form einer Schraubenauflage 57 und eines Zentrierelements 58 zur Schwingungs- und/oder Schallübertragungsdämpfung eingesetzt.

Vom Motor 3 sind wiederum der Stator 35 im Bereich des Außengehäuses 40 sowie der Rotor 31 und die Rotorachse 32 im Bereich des Innengehäuses 50 zu erkennen.

Des Weiteren sind am oder im Innengehäuse 50 Komponenten 21, 22 des Getriebes 20 aufgenommen.

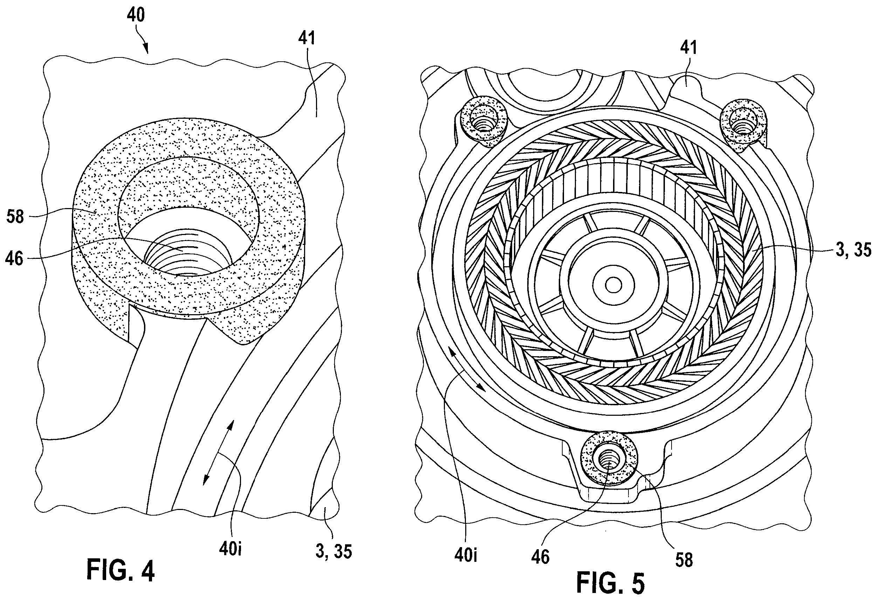

Figuren 4 und 5 zeigen in schematischer und perspektivischer Draufsicht Details der Befestigung eines Innengehäuses 50 oder einer Inneren Getriebebox 50 an einem übergeordneten äußeren Gehäuse 40 bei einer Ausführungsform der erfindungsgemäßen Antriebseinheit 80.

Insbesondere ist zu erkennen, dass im Bereich des Außengehäuses 40 in dessen erster Hälfte oder Schale 41 im Bereich der Aufnahme für den Stator 35 des Motors 3 im Inneren 40i des Außengehäuses 40 als Befestigungselemente Schraublöcher oder Montagelöcher 46 ausgebildet sind die der Aufnahme von entsprechend kooperierenden Befestigungselementen in Form von Schrauben 45 dienen, wobei zur Dämpfung oder Reduzierung mechanischer Schwingungen und/oder von Schall im Bereich der Schraublöcher oder Gewindelöcher 46 erfindungsgemäß bei dieser Ausführungsform Zwischenelemente oder Zentrierelemente 58 als Entkopplungselemente ausgebildet sind.

Insbesondere ist aus Figur 4 ersichtlich, dass diese Entkopplungselemente 58 in Form von Zentrierelementen oder Zwischenelementen aus einem porösen Material, zum Beispiel aus porösem Aluminium, bestehen können.

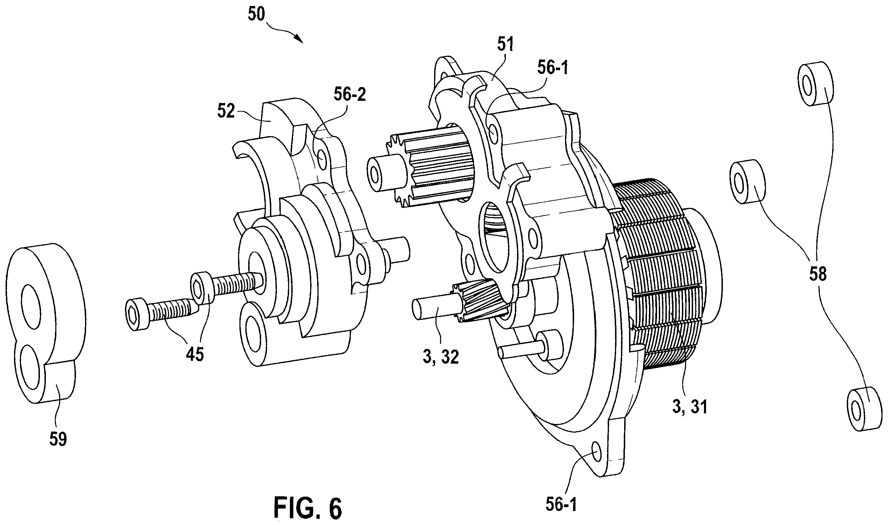

Figur 6 illustriert - nach Art einer schematischen Explosionsdarstellung perspektivisch - Aspekte eines erfindungsgemäß verwendeten Innengehäuses 50 mit entsprechenden Befestigung- und Montagemechanismen in Form von Befestigungselementen 45, 46, 55, 56 mit entsprechenden Entkopplungselementen 57, 58, 59.

Die Explosionsdarstellung der Figur 6 zeigt ein Innengehäuse 40 mit erster Schale 41 und zweiter Schale 42 und mit darin aufgenommenen Komponenten 21 bis 23 eines Getriebes 20 sowie Komponenten 31 und 32 eines Motors 3 bei einer Ausführungsform der erfindungsgemäßen Antriebseinheit 80.

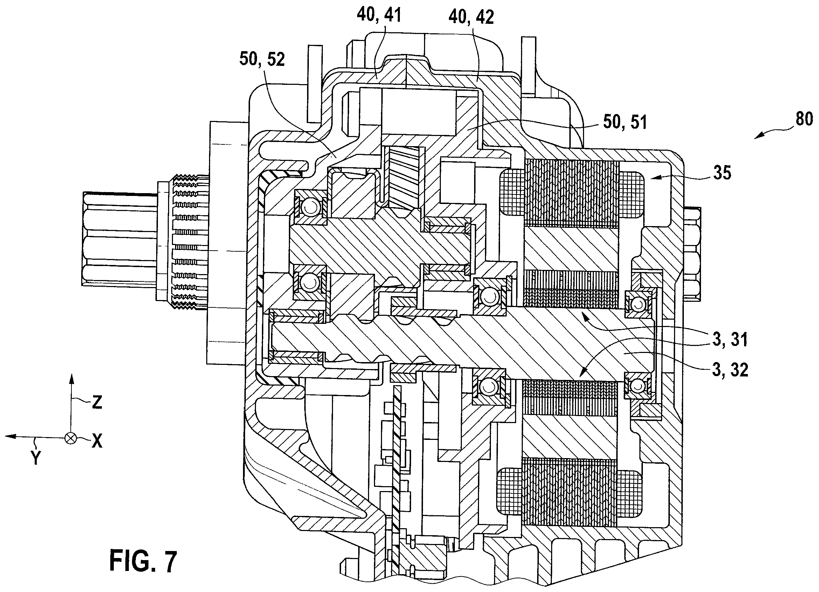

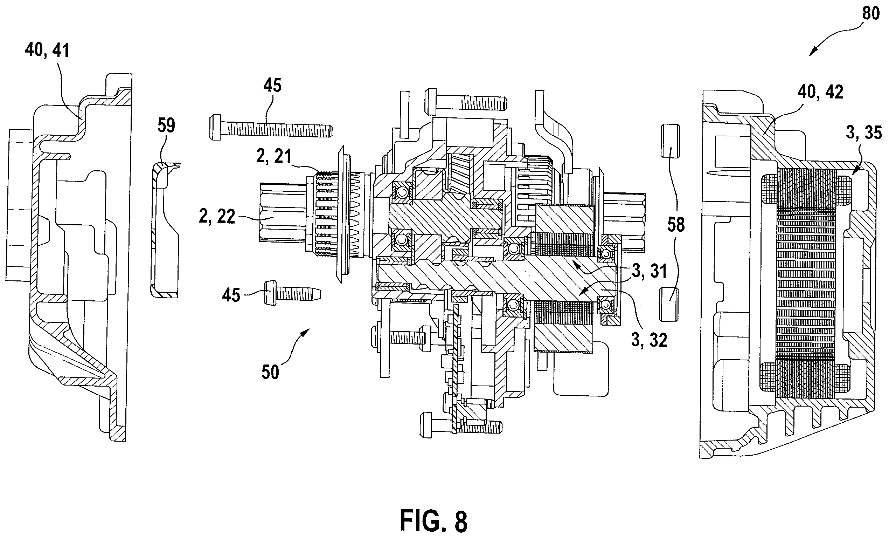

Die Figuren 7 und 8 zeigen in schematischer und teilweise geschnittener Seitenansicht eine Ausführungsform der erfindungsgemäßen Antriebseinheit 80 im montierten bzw. teilweise demontierten Zustand.

Diese und weitere Merkmale und Eigenschaften der vorliegenden Erfindung werden an Hand der folgenden Darlegungen weiter erläutert:
Am Markt befindliche oder sonst bekannte Antriebseinheiten 80 oder Drive-Units für Arbeitsvorrichtungen 1 und insbesondere für Elektrofahrräder 1', eBikes oder Pedelecs oder dergleichen besitzen ein einzelnes Gehäuse, in dem die Getriebekomponenten - zum Beispiel der und/oder Rotorwellen und übrigen Getriebewellen - aufgenommen und/oder gelagert sind.

Bei diesen Konzepten besitzen die Rotorwellen und die Getriebewellen einen direkten also unmittelbaren metallischen Kontakt zum übergeordneten Gehäuse. Deshalb werden herkömmlicherweise Vibrationen und/oder Körperschall direkt eingekoppelt, was zu einer schlechten Akustik führt.

Teilweise ist auch die Montierbarkeit - insbesondere im Hinblick auf ein blindes Fügen - schwierig.

Erfindungsgemäß wird eine innere Getriebebox 50 vorgeschlagen, welche im Inneren 40i des übergeordneten Gehäuses 40 angebracht ist oder wird und in welche Rotorwellen 32 und Getriebewellen 21 oder andere Komponenten eines Getriebes 20 aufgenommen und/oder gelagert sind oder werden.

Die innere Getriebebox 40 ist oder kann über Entkopplungselemente 57 bis 59 im übergeordneten Gehäuse 40 gelagert sein oder werden.

Es stellen sich folgende Vorteile einzeln oder in Kombination ein:
- Der zweischalige Gehäuseaufbau des Gehäuses mit übergeordneten Gehäuse 40 und innerer Getriebebox 50 hat positive Auswirkung auf das akustische Verhalten.
- Die Befestigungselemente 45, 46, 56 können mit Entkopplungselementen 57 bis 59 und/oder als Entkopplungselemente 57 bis 59 zur Reduzierung der Körperschallübertragung ausgebildet sein oder werden.
- Durch eine gezielt abgestimmte und ausgebildete Geometrie und/oder durch Auswahl des Materials bzw. einer Materialkombination für die innere Getriebebox 50 selbst, für die Befestigungselemente 45, 46, 56 und/oder für die Entkopplungselemente 57 bis 59 können die Eigenschaften angepasst werden.

- Die Auslegung kann einem Feder-Dämpfer-System entsprechen.
- Zwischen Innenschale 50 und Außenschale 40 können Dämpfungselemente 59 angebracht sein oder werden.
- Diese können auch der Wärmeübertragung dienen.
- Die innere Getriebebox 50 und die darin gelagerten Getriebewellen oder Getriebekomponenten 21 bis 23 des Getriebes 20 - inklusive Schmierung - können in einer Baugruppe zusammengefasst werden und separat vormontiert werden. Dies vereinfacht Montage, Reparatur und/oder Wartung der zu Grunde liegenden Arbeitsvorrichtung 1.
- Die innere Getriebebox 50 kann die dort aufgenommenen und/oder gelagerten Wellen und Zahnräder als Komponenten 21 bis 23 des Getriebes 20 eng umschließen, so dass die Schmiermenge reduziert und die Rückführung des Schmierstoffes in den Verzahnungseingriff gezielt gesteuert werden können.
- Wellen der schnell laufenden Getriebestufen - inklusive einer oder mehrerer Rotorwellen 32 - können in nur zwei Bauteilen gelagert sein oder werden. Somit ergibt sich eine kurze Toleranzkette.
- Bestandteile bei bevorzugten Ausgestaltungsformen der vorliegenden Erfindung sind primär das Vorsehen (i) einer vom übergeordneten Gehäuse 40 entkoppelten inneren Getriebebox 50, (ii) eines oder mehrerer Entkopplungselemente 57 bis 59 - gegebenenfalls mit Unterlegscheiben 57 - und/oder (iii) eines oder mehrerer Dämpfungselemente 59.

## Patentansprüche

1. Antriebseinheit (80) für eine mit Motorkraft und zusätzlich mit
Muskelkraft antreibbare Arbeitsvorrichtung (1), für ein Fahrzeug (1'),
Elektrofahrrad, eBike, Pedelec und/oder S-Pedelec, mit:
- einem Motor (3),
- einem Getriebe (20) und
- einem Gehäuse (40), in dessen Inneren (40i) der Motor (3) und/oder das Getriebe (20) zumindest teilweise aufgenommen und/oder gelagert ist bzw. sind,
**dadurch gekennzeichnet, dass**
- das Gehäuse (40) in seinem Inneren (40i) ganz ein Innengehäuse (50) zur Aufnahme und/oder Lagerung zumindest eines Teils des vom Gehäuse (40) aufgenommenen Getriebes (20) in dessen Innerem (50i) aufweist und
- das Innengehäuse (50) am Gehäuse (40) angebracht ist.

2. Antriebseinheit (80) nach Anspruch 1, bei welcher das Innengehäuse (50) ganz oder teilweise am Inneren (40i) des Gehäuses (40) angebracht ist.

3. Antriebseinheit (80) nach einem der vorangehenden Ansprüche,
- bei welcher das Innengehäuse (50) über ein oder mehrere Befestigungselemente (45, 46, 56, 56-1, 56-2, 57, 58) am Gehäuse (40) angebracht ist,
- welche mechanisch und/oder akustisch entkoppelnd ausgebildet sind.

4. Antriebseinheit (80) nach Anspruch 3, bei welcher das eine oder die mehreren Befestigungselemente (45, 46, 56, 56-1, 56-2, 57, 58) als Entkopplungselemente (57, 58) ausgebildet sind oder Entkopplungselemente (57, 58) aufweisen.

5. Antriebseinheit (80) nach einem der Ansprüche 3 oder 4, bei welcher das eine oder die mehreren Befestigungselemente (45, 46, 56, 56-1, 56-2, 57, 58) und/oder die Entkopplungselemente (57, 58) mit oder aus einem mechanisch und/oder akustisch entkoppelnden Material ausgebildet sind.

6. Antriebseinheit (80) nach einem der Ansprüche 3 bis 5, bei welcher das eine oder die mehreren Befestigungselemente (45, 46, 56, 56-1, 56-2, 57, 58) und/oder die Entkopplungselemente (57, 58) mit oder aus einem Material aus der Gruppe von Materialien ausgebildet sind, welche aufweist metallische Materialien, Metalle, Aluminium, Verbundwerkstoffe, poröse Materialien, geschäumte Materialien, schaumartige Materialien und/oder gesinterte Materialien.

7. Antriebseinheit (80) nach einem der vorangehenden Ansprüche, sofern rückbezogen auf Anspruch 3 oder 4, bei welcher das eine oder die Befestigungselemente (45, 46, 56, 56-1, 56-2, 57, 58) und/oder die Entkopplungselemente (57, 58) als Unterlegscheibe, Federring, Feder-Dämpfer-Element, Schraubenauflage und/oder Zentrierelement ausgebildet ist bzw. sind.

8. Antriebseinheit (80) nach einem der vorangehenden Ansprüche, sofern rückbezogen auf Anspruch 3 oder 4, bei welcher das eine oder die Befestigungselemente (45, 46, 56, 56-1, 56-2, 57, 58) und/oder die Entkopplungselemente (57, 58) zur Wärmekopplung des Innengehäuses (50) an das Gehäuse (40) ausgebildet ist.

9. Antriebseinheit (80) nach einem der vorangehenden Ansprüche, bei welcher im Inneren (50i) des Innengehäuses (50) hochtourige oder schnelllaufende - Teile (21, 22, 23) des Getriebes (20) ganz oder teilweise aufgenommen und/oder gelagert sind oder werden.

10. Mit Muskelkraft und zusätzlich mit Motorkraft antreibbare Arbeitsvorrichtung (1), Fahrzeug (1'), Elektrofahrrad, eBike, Pedelec und/oder S-Pedelec, mit einer Antriebseinheit (80) nach einem der vorangehenden Ansprüche und mit einer Steuereinheit (100), welche zur Steuerung der Antriebseinheit (80) eingerichtet ist.

## Claims

1. Drive unit (80) for a working device (1) which can be driven by motor power and additionally by muscle power, for a vehicle (1'), electric bicycle, e-bike, pedelec and/or S-pedelec,
with:
- a motor (3),
- a transmission (20), and
- a housing (40), in the interior (40i) of which the motor (3) and/or the transmission (20) is or are at least partially received and/or mounted,
**characterized in that**
- the housing (40) completely has, in its interior (40i), an inner housing (50) for receiving and/or mounting at least a part of the transmission (20) received by the housing (40) in the interior (50i) of the said inner housing, and
- the inner housing (50) is attached to the housing (40).

2. Drive unit (80) according to Claim 1, in which the inner housing (50) is attached completely or partially to the interior (40i) of the housing (40).

3. Drive unit (80) according to either of the preceding claims,
- in which the inner housing (50) is attached via one or more fastening elements (45, 46, 56, 56-1, 56-2, 57, 58) to the housing (40),
- which fastening elements are designed to decouple mechanically and/or acoustically.

4. Drive unit (80) according to Claim 3, in which the one or more fastening elements (45, 46, 56, 56-1, 56-2, 57, 58) are designed as decoupling elements (57, 58) or have decoupling elements (57, 58).

5. Drive unit (80) according to either of Claims 3 or 4, in which the one or more fastening elements (45, 46, 56, 56-1, 56-2, 57, 58) and/or the decoupling elements (57, 58) are formed with or of a mechanically and/or acoustically decoupling material.

6. Drive unit (80) according to any one of Claims 3 to 5, in which the one or more fastening elements (45, 46, 56, 56-1, 56-2, 57, 58) and/or the decoupling elements (57, 58) are formed with or from a material from the group of materials which comprises metallic materials, metals, aluminium, composites, porous materials, foamed materials, foam-like materials and/or sintered materials.

7. Drive unit (80) according to any one of the preceding claims, if referring back to Claim 3 or 4, in which the one fastening element or the fastening elements (45, 46, 56, 56-1, 56-2, 57, 58) and/or the decoupling elements (57, 58) is or are formed as a washer, spring ring, spring-damper element, screw support and/or centring element.

8. Drive unit (80) according to any one of the preceding claims, if referring back to Claim 3 or 4, in which the one fastening element or the fastening elements (45, 46, 56, 56-1, 56-2, 57, 58) and/or the decoupling elements (57, 58) is or are formed for thermal coupling of the inner housing (50) to the housing (40).

9. Drive unit (80) according to any one of the preceding claims, in which highspeed or fast-running parts (21, 22, 23) of the transmission (20) are completely or partially received and/or mounted in the interior (50i) of the inner housing (50).

10. Working device (1), vehicle (1'), electric bicycle, e-bike, pedelec and/or S-pedelec, which can be driven by muscle power and additionally by motor power, having a drive unit (80) according to any one of the preceding claims and having a control unit (100) which is configured to control the drive unit (80).

## Revendications

1. Unité d'entraînement (80) pour un dispositif de travail (1) pouvant être entraîné avec une force de moteur et en supplément avec une force musculaire, pour un véhicule (1'), une bicyclette électrique, un vélo électrique, un vélo à assistance électrique et/ou un vélo à assistance électrique de classe S, avec :
- un moteur (3),
- une transmission (20) et
- un boîtier (40), dans l'espace intérieur (40i) duquel le moteur (3) et/ou la
transmission (20) sont logés et/ou montés au moins en partie, **caractérisée en ce que**
- le boîtier (40) comporte, dans son espace intérieur (40i), entièrement un boîtier intérieur (50) pour loger et/ou monter au moins une partie de la transmission (20) logée par le boîtier (40) dans son espace intérieur (50i), et
- le boîtier intérieur (50) est installé sur le boîtier (40).

2. Unité d'entraînement (80) selon la revendication 1, dans laquelle le boîtier intérieur (50) est installé entièrement ou en partie sur l'espace intérieur (40i) du boîtier (40).

3. Unité d'entraînement (80) selon l'une des revendications précédentes,
- dans laquelle le boîtier intérieur (50) est installé sur le boîtier (40) par un ou plusieurs éléments de fixation (45, 46, 56, 56-1, 56-2, 57, 58),
- qui sont formés de manière à assurer un découplage mécanique et/ou acoustique.

4. Unité d'entraînement (80) selon la revendication 3, dans laquelle le ou les plusieurs éléments de fixation (45, 46, 56, 56-1, 56-2, 57, 58) sont formés comme des éléments de découplage (57, 58) ou comportent des éléments de découplage (57, 58).

5. Unité d'entraînement (80) selon l'une des revendications 3 et 4, dans laquelle l'élément de fixation ou les plusieurs éléments de fixation (45, 46, 56, 56-1, 56-2, 57, 58) et/ou les éléments de découplage (57, 58) sont formés avec ou à partir d'un matériau de découplage mécanique et/ou acoustique.

6. Unité d'entraînement (80) selon l'une des revendications 3 à 5, dans laquelle l'élément de fixation ou les plusieurs éléments de fixation (45, 46, 56, 56-1, 56-2, 57, 58) et/ou les éléments de découplage (57, 58) sont formés avec ou à partir d'un matériau du groupe des matériaux qui comporte des matériaux métalliques, des métaux, de l'aluminium, des matériaux composites, des matériaux poreux, des matériaux expansés, des matériaux de type mousse et/ou des matériaux frittés.

7. Unité d'entraînement (80) selon l'une des revendications précédentes, dans la mesure où elles se rapportent à la revendication 3 ou 4, dans laquelle l'élément de fixation ou les éléments de fixation (45, 46, 56, 56-1, 56-2, 57, 58) et/ou les éléments de découplage (57, 58) sont formés comme une rondelle, un anneau élastique, un élément amortisseur à ressort, un support de vis et/ou un élément de centrage.

8. Unité d'entraînement (80) selon l'une des revendications précédentes, dans la mesure où elles se rapportent à la revendication 3 ou 4, dans laquelle l'élément de fixation ou les éléments de fixation (45, 46, 56, 56-1, 56-2, 57, 58) et/ou les éléments de découplage (57, 58) sont formés pour coupler thermiquement le boîtier intérieur (50) au boîtier (40).

9. Unité d'entraînement (80) selon l'une des revendications précédentes, dans laquelle des parties à haute vitesse ou rapides (21, 22, 23) de la transmission (20) sont logées et/ou montées entièrement ou en partie dans l'espace intérieur (50i) du boîtier intérieur (50).

10. Dispositif de travail (1) pouvant être entraîné par la force musculaire et en supplément par la force d'un moteur, véhicule (1'), bicyclette électrique, vélo électrique, vélo à assistance électrique et/ou vélo à assistance électrique de type S, avec une unité d'entraînement (80) selon l'une des revendications précédentes et avec une unité de commande (100), laquelle est mise au point pour la commande de l'unité d'entraînement (80).
